# EUROPÄISCHE PATENTSCHRIFT

(11) **EP 0 574 838 B1**
(45) Veröffentlichungstag und Bekanntmachung des Hinweises auf die Patenterteilung: **14.08.1996**
(21) Anmeldenummer: 93109343.9
(22) Anmeldetag: 11.06.1993
(51) Int. Cl.: H04N 17/04, H01J 9/44

(54) **Verfahren und Vorrichtung zum Messen der Elektronendichteverteilung eines Elektronenstrahls**
Method and device for measuring the electron density distribution of an electron beam
Procédé et dispositif pour déterminer le distribution de densité d'électron d'un faisceau d'électron

(30) Priorität: 16.06.1992 DE 4219627
(43) Veröffentlichungstag der Anmeldung: 22.12.1993
(73) Patentinhaber: NOKIA TECHNOLOGY GmbH, D-75175 Pforzheim (DE)
(72) Erfinder: Hassler, Joachim, D-7300 Esslingen (DE); Kilgus, Herbert, D-7306 Denkendorf (DE); Reinknecht, Jürgen, D-2864 Hambergen (DE)

(56) Entgegenhaltungen:
- EP-A- 0 030 259
- US-A- 4 602 272
- DISPLAYS Bd. 7, Nr. 1, Januar 1986, GUILDFORD GB Seiten 17 - 29 P KELLER 'Resolution measurement techniques for data display cathode ray tubes'
- SID INTERNATIONAL SYMPOSIUM: DIGEST OF TECHNICAL PAPERS, Mai 1987, NEW ORLEANS,US Seiten 225 - 227 D BORTFELD ET AL 'Semi-automatic measurement of the two-dimensional intensity distribution of a color CRT electron-beam spot'

## Beschreibung

Das Folgende betrifft ein Verfahren und eine Vorrichtung zum Messen der Dichteverteilung eines Elektronenstrahls in einer Farbbildröhre.

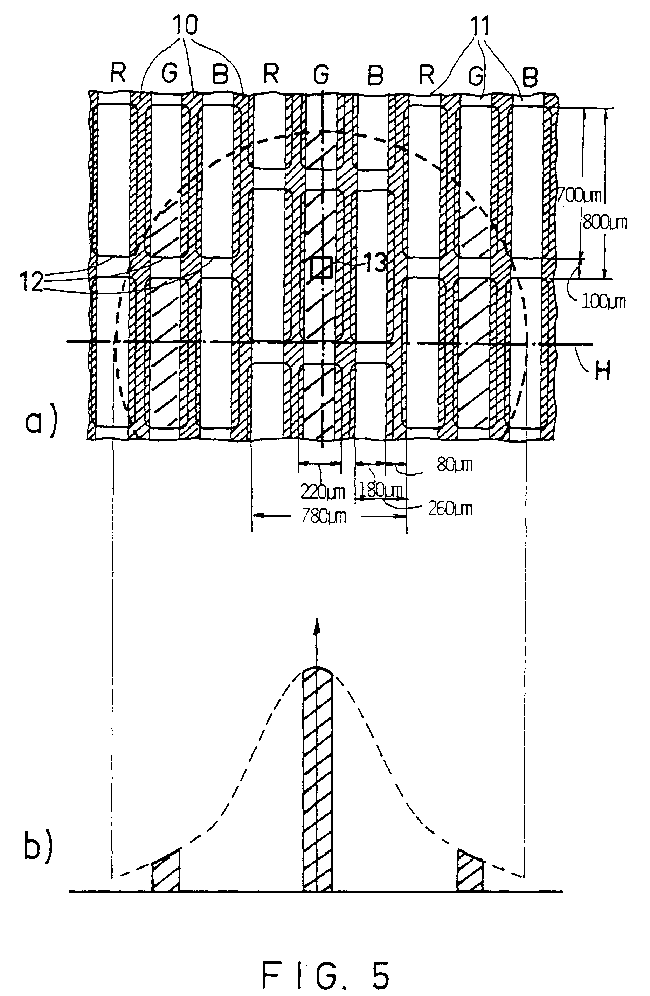

Begriffe, die nachfolgend bei den Darstellungen des Standes der Technik und der Erfindung verwendet werden, werden zunächst anhand von Fig. 5a und b erläutert. Fig. 5a stellt schematisch eine Teildraufsicht auf den Leuchtschirm einer Farbbildröhre dar, während Fig. 5b die Dichteverteilung eines Elektronenstrahls veranschaulicht.

Der Leuchtschirm gemäß Fig. 5a weist Matrixstreifen 10 und Leuchtstoffstreifen 11 für drei unterschiedliche Farben auf, was durch R für rot, G für grün und B für blau angedeutet ist. Jeder Farbe ist ein Elektronenstrahl zugeordnet, der in x- und y-Richtung über den Leuchtschirm gerastert wird. Elektronen dringen dann in Form sogenannter Spots 12 durch eine (nicht dargestellte) Schattenmaske auf den Leuchtschirm. Beim Beispiel gemäß Fig. 5a hat jeder Spot eine Höhe von 700 µm und eine Breite von 220 µm. Der vertikale Abstand zwischen den Anfängen benachbarter Spots beträgt 800 µm, während der horizontale Abstand 260 µm beträgt. Die Spots rufen jedoch nicht über ihre gesamte Fläche einen Leuchteffekt hervor, sondern nur in demjenigen Bereich, in dem ein Spot auf einen Leuchtstoffstreifen trifft. Es sei darauf hingewiesen, daß die genannten Abmessungen im wesentlichen für die Mitte der Farbbildröhre gelten. Zum Rand in horizontaler taler Richtung werden die Breiten der Leuchtstoffstreifen größer und die Spotbreiten kleiner. In vertikaler Richtung nehmen zum Rand hin die Spotbreiten ab.

Während ein leuchtender Bereich, wie eben definiert, diejenige Fläche des Leuchtschirms ist, in der ein einzelner Elektronenspot einen Leuchteffekt hervorruft, ist ein leuchtender Abschnitt ein solcher Teil eines leuchtenden Bereichs, wie er durch das Loch 13 einer Blende hindurch erkennbar ist. Als übergeordneter Begriff wird derjenige der leuchtenden Gebiete verwendet. Leuchtende Gebiete sind beliebige leuchtende Flächenteile, also z. B. nur Teile eines Abschnitts oder auch mehrere leuchtende Abschnitte oder Bereiche gemeinsam.

In Fig. 5a ist als gestrichelter Teilkreis eine Linie eingezeichnet, die die Grenze eines stehenden Elektronenstrahls veranschaulichen soll. Diese Grenze ist bei 5 % der Maximalhelligkeit des Strahls gezogen. Die Helligkeitsverteilung ist in Fig. 5b dargestellt. Sie entspricht im wesentlichen der Elektronendichteverteilung; letztere kann also dadurch bestimmt werden, daß die Helligkeitsverteilung gemessen wird, die der Elektronenstrahl auf dem Leuchtschirm hervorruft.

Wäre keine Schattenmaske vorhanden und wäre der Schirm homogen mit Leuchtstoff beschichtet, würde bei guter Elektronenstrahl formung ein kreisförmiger Elektronenfleck auf den Leuchtschirm auftreffen und dort einen kreisförmigen Leuchtfleck erzeugen, dessen Berandung mit der gestrichelten Linie 14 von Fig. 5a übereinstimmen würde. Tatsächlich leuchten von diesem hypothetischen Leuchtfleck jedoch nur wenige Bereiche, die in Fig. 5a durch Schraffierung in den Leuchtstreifen G angedeutet sind. An dieser Stelle sei darauf hingewiesen, daß beim Betreiben einer Farbbildröhre mit einem einzigen Elektronenstrahl nicht alle Spots 12 gemäß Fig. 5a erkennbar sind, sondern nur diejenigen, die zum gerade ausgesandten Elektronenstrahl gehören, also z. B. zu dem, der die grün leuchtenden Leuchtstoffstreifen zu Lumineszenz anregen soll. Von diesen Leuchtstoffstreifen wiederum leuchten nur diejenigen Bereiche, die innerhalb des Kreises mit der Berandung 14 liegen. Wenn im folgenden von einem Elektronenfleck die Rede ist, so ist hierunter der Elektronenfleck zu verstehen, wie er von einem einzigen Elektronenstrahl erzeugt würde, wenn die Schattenmaske fehlen würde. Unter einem Leuchtfleck wird diejenige Fläche verstanden, die ein solcher hypothetischer Elektronenfleck erzeugen würde, wenn der Leuchtschirm homogen mit Leuchtstoff beschichtet wäre.

Bei einem bekannten und in DE-A- 3328838 beschriebenen Verfahren zum Messen der Elektronendichteverteilung, gesehen über den Querschnitt eines Elektronenstrahls in einer Farbbildröhre, wird ein Leuchtfleck durch das Blendenloch 13 von Fig. 5a mit einer lichtempfindlichen Diode betrachtet, die, unter Umständen noch mit einer Optik, als Kamera wirkt. Die Blende schirmt die Diode vor allem Licht ab, außer demjenigen, das durch das Blendenloch 13 dringt. Der Elektronenstrahl wird dann so justiert, daß seine Mitte mit dem Blendenloch 13 übereinstimmt (ausgehend von der Position von Fig. 5a müßte er also noch etwas hochgeschoben werden). Anschließend wird der Elektronenstrahl horizontal und vertikal unter dem Blendenloch 13 hindurchbewegt. Es ergibt sich dabei ein zeitlicher Verlauf der Helligkeit, wie er in Fig. 5b als örtlicher Verlauf für die Helligkeit entlang der horizontalen Mittellinie H (Fig. 5a) eingezeichnet ist. Die Helligkeitsverteilung entlang der vertikalen Mittellinie sieht gleich aus, wenn der Elektronenstrahl kreissymmetrisch ist.

Das bekannte Verfahren weist also folgende Schritte auf:
- Verschieben des Elektronenstrahls;
- Aufnehmen der Bilder von Leuchtfleckgebieten, wie sie bei Verschiebung des Elektronenstrahls bei Wirkung eines Blendenmittels erkennbar sind; und
- Auswerten der aufgenommenen Bilder, um ein Ergebnis über die vom Elektronenstrahl hervorgerufene Leuchtdichteverteilung zu erhalten, mit der die Elektronendichteverteilung im wesentlichen übereinstimmt.

Die bekannte Vorrichtung weist folgende Merkmale auf:
- ein Blendenmittel;
- eine Kamera zum Aufnehmen der Bilder von Leuchtfleckgebieten, wie sie bei Wirkung des Blendenmittels auf dem Bildschirm erkennbar sind;
- eine Ansteuereinrichtung zum Ansteuern einer Ablenkeinrichtung an der Farbbildröhre in solcher Weise, daß der Elektronenstrahl gegenüber der Kamera verschoben wird; und
- eine Auswerteeinrichtung zum Auswerten der von der Kamera aufgenommenen Bilder, um ein Ergebnis über die vom Elektronenstrahl hervorgerufene Leuchtdichteverteilung zu erhalten, mit der die Elektronendichteverteilung im wesentlichen übereinstimmt;

Bei diesem Verfahren und der zugehörigen Vorrichtung muß die Blende auf die Mitte eines Leuchtstreifens justiert werden und der Elektronenstrahl muß in x- und y-Richtung so hinter dem Blendenloch vorbeibewegt werden, daß seine Mitte jeweils mit der Mitte des Blendenlochs zusammenfällt. Diese aufwendigen Justiervorgänge sind jeweils für drei Elektronenstrahlen an unterschiedlichen Schirmorten zu wiederholen, wenn die Strahlform für eine gesamte Röhre untersucht werden soll.

Ferner ist aus der Schrift "Display, Bd. 7, Nr. 1, Jan. 1986, Guildford GB, Seite 17-29" ein Verfahren bekannt, bei welchem zur Messung der Elektronendichteverteilung entweder der Elektronenstrahl schrittweise an einem Meßschlitz oder der Meßschlitz schrittweise an einem Spot vorbeigeführt wird. Wenngleich bei der letzten Variante ein Justieren des Meßschlitzes zum Maskenloch entfällt, ist dieses Verfahren relativ ungenau, weil damit nur die Helligkeitsverteilung gemessen werden kann, die durch das Maskenloch fällt. Da aber nicht sicher ist, ob der Elektronenstrahl seinen Leuchtdichteschwerpunkt in dem Bereich hat, der das Maskenloch durchdringt, kann dieses Verfahren mit hinreichender Genauigkeit nur bei Röhren eingesetzt werden, die keine Schattenmaske haben. Mithin kann dieses Verfahren nicht bei Röhren der laufenden Produktion eingesetzt werden, weil diese im Meßzeitpunkt schon mit einer Schattenmaske versehen sind. Ferner ist es aus der letztbenannten Schrift bekannt, zwei Meßschlitze zu verwenden, deren Längsachsen quer zur Laufrichtung des Elektronenstrahls liegen und deren Längsachsen einen definierten Abstand zueinander haben. Die Bekanntheit des Abstandes zwischen zwei Meßschlitzen bzw. zwei Scheitelpunkten der durch die Meßschlitze ermittelten Leuchtdichteverteilungskurven kann dazu genutzt werden, um die Abszisse zu skalieren bzw. Aussagen über die Spotbreite zu machen, bei welcher beispielsweise 50 % der Helligkeit vorliegt.

Wie aus dem Vorstehenden ersichtlich, bestand das Problem darin, ein Verfahren und eine Vorrichtung der vorstehend genannten Gattung anzugeben, bei welchem bzw. mit welcher bei Farbbildröhren mit Schattenmasken ohne großen Justieraufwand die Elektronendichteverteilung gemessen werden kann.

### Darstellung der Erfindung

Die weiter oben angegebenen bekannten Tatsachen und die entsprechenden Lösungsmerkmale der erfinderischen Vorrichtung und des erfindungsgemäßen Verfahrens sind in den unabhängigen Patentansprüchen 1 und 3 beansprucht.

Bei der erfindungsgemäßen Vorrichtung und beim erfindungsgemäßen Verfahren ist keinerlei Justierung mehr erforderlich, da erstens das Blendenmittel dadurch simuliert wird, daß nur bestimmte Bereiche des Bildwandlers zur Bildauswertung zugelassen werden, und da zweitens nicht, wie beim Stand der Technik, zwei Schnitte der Helligkeitsverteilung aufgenommen werden, die möglichst genau getroffen werden müssen, sondern die Leuchtdichteverteilung für den gesamten (hypothetischen) Leuchtfleck aufgenommen wird. In dem so aufgenommenen Gesamtbild können dann leicht auf elektronische Weise beliebige Schnitte gelegt werden.

Die erfindungsgemäße Vorrichtung und das erfindungsgemäße Verfahren arbeiten so, daß durch schrittweises Verschieben des Elektronenstrahls insgesamt alle Leuchtfleckgebiete aufgenommen werden. Das Verschieben erfolgt durch Verändern des Ablenkstroms. Um den Elektronenstrahl jeweils so zu verschieben, daß jeder betrachtete Leuchtstoffabschnitt immer gerade an zuvor betrachteten benachbarten anschließt, ist es erforderlich, daß der Zusammenhang zwischen Ablenkstrom und Verschiebeschrittweite möglichst genau bekannt ist. Für Grobmessungen kann dieser Zusammenhang jeweils für unterschiedliche Schirmorte jeweils für eine bestimmte Röhrentype appliziert und abgespeichert werden. Genauer ist es jedoch, für jeden Schirmort aktuell eine Kalibrierung vorzunehmen. Hierzu wird das simulierte Blendenmittel so variiert, daß es über mindestens ein Paar zueinander paralleler simulierter Kalibrierschlitze verfügt, die in der rechtwinklig zur Schlitzlängsrichtung stehenden Richtung um eine vorgegebene Strecke voneinander beabstandet sind. Es wird dann in einem ersten Kalibrierschritt der Elektronenstrahl in eine vorgegebene Lage gestellt und der hierfür erforderliche Ablenkstrom gemessen. Die vorgegebene Lage ist z. B. diejenige Lage, bei der hinter dem linken simulierten Kalibrierschlitz maximale Helligkeit gemessen wird. In einem zweiten Kalibrierschritt wird der Elektronenstrahl in eine zweite vorgegebene Lage gestellt, und es wird wiederum der hierfür erforderliche Ablenkstrom gemessen. Diese zweite Lage ist z. B. diejenige Lage, in der hinter dem rechten simulierten Xalibrierschlitz maximale Helligkeit gemessen wird. Als Empfindlichkeit für die Schrittweitenverstellung wird das Verhältnis (Differenz zwischen den gemessenen Ablenkströmen)/(Abstand zwischen den simulierten Kalibrierschlitzen) bestimmt. Aus dieser Empfindlichkeit und der erforderlichen Verschiebestrecke kann der erforderliche Ablenkstrom genau berechnet werden.

Von besonderem Vorteil ist es, ein simuliertes-Blendenmittel mit einer größeren Anzahl simulierter Meßschlitze zu verwenden, wobei die Anordnung der simulierten Meßschlitze der Anordnung der Maskenschlitze entspricht und wobei der Abstand benachbarter simulierter Meßschlitze in x- und y-Richtung jeweils einem ganzzahligen Vielfachen der Maskenschlitzbreite bzw. -höhe entspricht. Dann muß nämlich der Elektronenfleck weniger oft verschoben werden, um alle seine Gebiete aufzunehmen, als wenn nach jedem Verschiebeschritt immer nur ein Bild durch einen einzigen simulierten Meßschlitz hindurch aufgenommen wird.

Um hohe Meßgenauigkeit zu erzielen, ist es von Vorteil, einen CCD-Bildwandler zu verwenden.

### Zeichnung

Fig. 1: Blockfunktionsbild zum Erläutern eines Verfahrens und einer Vorrichtung zum Messen der Elektronendichteverteilung eines Elektronenstrahls in einer Farbbildröhre;
Fig. 2: Blockschaltbild zum Erläutern des Zusammenhangs zwischen Pixeln eines CCD-Bildwandlers und Speicherzellen eines RAM;
Fig. 3: vergrößerte Draufsicht auf eine Blendeneinrichtung, deren Wirkung von einem Blendenmittel simuliert wird;
Fig. 4a, b: Flußdiagramm zum Erläutern eines Ausführungsbeispiels eines Verfahrens zum Messen der Elektronendichteverteilung eines Elektronenstrahls; und
Fig. 5a, b: Teildraufsicht auf einen Leuchtschirm bzw. Darstellung der Elektronendichteverteilung eines Elektronenstrahls in horizontaler Richtung, zum Erläutern verschiedener Begriffe.

### Beschreibung von Ausführungsbeispielen

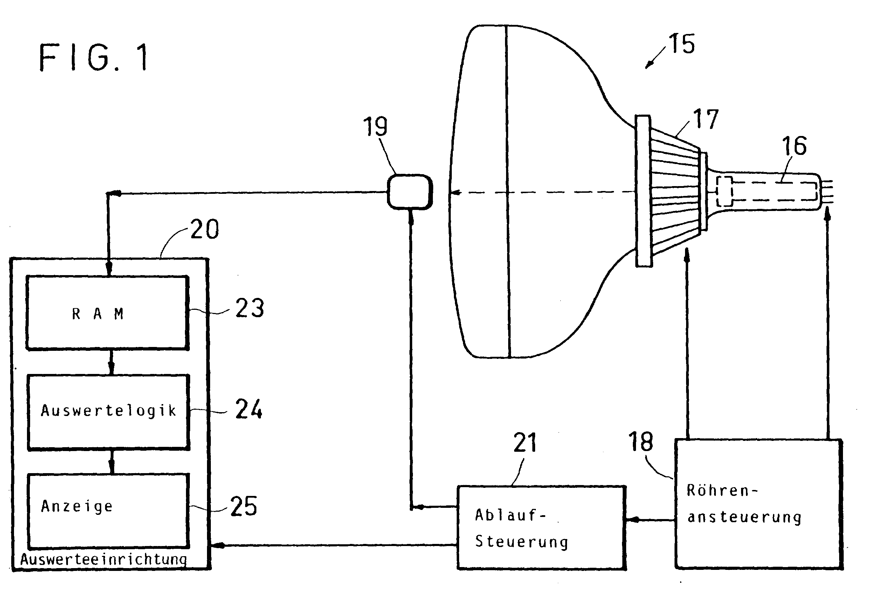

Die Vorrichtung gemäß Fig. 1 zum Messen der Elektronendichteverteilung eines Elektronenstrahls arbeitet an einer Farbbildröhre mit einem Elektronenstrahlerzeuger 16 und einer Ablenkeinrichtung 17. Die Meßvorrichtung verfügt über eine Röhrenansteuerung 18 zum Ansteuern des Elektronenstrahlerzeugers 16 und der Ablenkeinrichtung 17, über eine CCD-Bildwandlerkamera 19 und eine Auswerteeinrichtung 20. Der zeitliche Ablauf der Funktionen der Röhrenansteuerung 18, der CCD-Bildwandlerkamera 19 und der Auswerteeinrichtung 20 wird mit Hilfe einer Ablaufsteuerung 21 gesteuert. Die Auswerteeinrichtung 20 verfügt über einen RAM 23, eine Auswertelogik 24 und eine Anzeige 25.

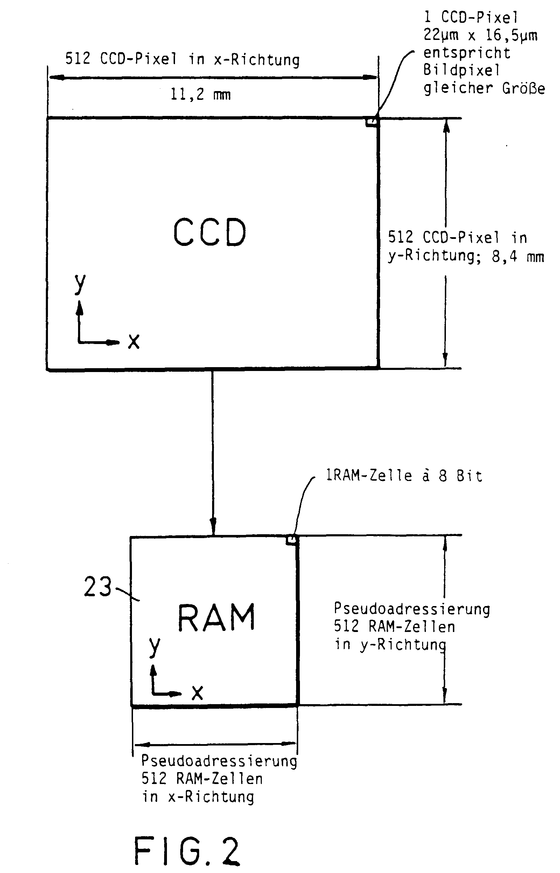

Die Bildwandlerkamera verfügt über ein CCD, wie es in Fig. 2 dargestellt ist. Es weist jeweils 512 Pixel in x- und y-Richtung auf. Jedes Pixel ist 22 µm breit und 16,5 µm hoch, weist also ein Kantenverhältnis von 4:3 auf. Die Kantenlängen des CCDs betragen 11,2 bzw. 8,4 mm. Jedes CCD-Pixel speichert eine von der auf das Pixel auftreffenden Lichtmenge abhängende Ladungsmenge.

Die Ladungen aus den CCD-Pixeln werden mit Hilfe der Ablaufsteuerung steuerung 21 in den RAM 23 eingelesen. Dieser RAM verfügt über 2¹⁸ Zellen a 8 Bit (256 kByte). Der Anschaulichkeit halber wird in Fig. 2 von einer Pseudoadressierung von jeweils 512 RAM-Zellen in x- und y-Richtung ausgegangen, entsprechend der Anzahl und Anordnung der CCD-Pixel. Diese Darstellung macht unmittelbar erkennbar, daß im RAM Information abgespeichert werden kann, die dem vom CCD aufgenommenen Bild entspricht.

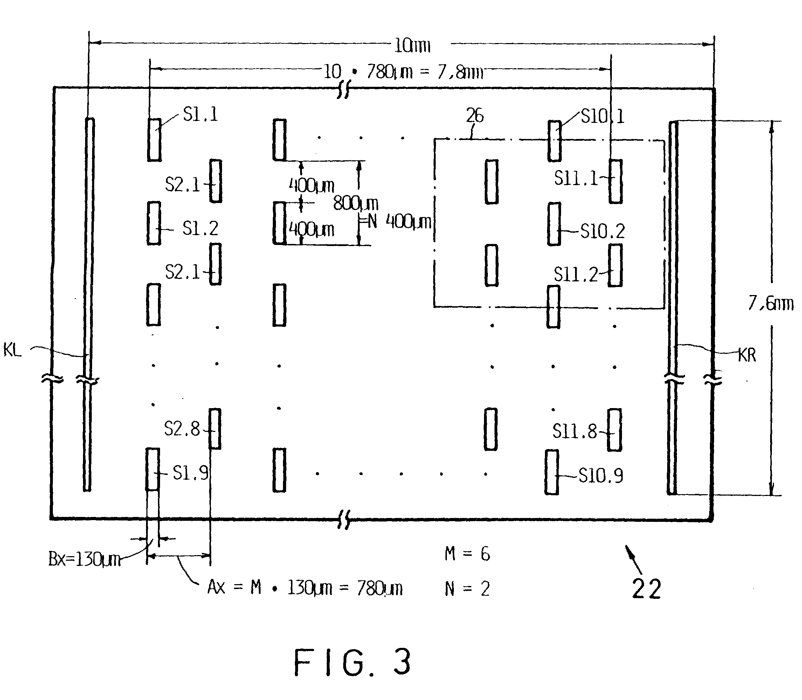

Im RAM werden nur bestimmte Bereiche zur Bildauswertung freigegeben, so daß in diesem nur ein Bild nutzbar ist, das einem solchen entspricht, wie es durch eine Blendeneinrichtung hindurch sichtbar ist. Der RAM simuliert also ein Blendenmittel. Dieses simulierte Blendenmittel ist in Fig. 3 als Blendeneinrichtung 22 dargestellt. Es weist zwei simulierte Kalibrierschlitze KL und KR sowie eine Vielzahl simulierter Meßschlitze Sa.b (a = 1, 2 ..., 11; b = 1, 2, ..., 9 für ungerade a, jedoch 1, 2, ..., 8 für gerade a) auf. Jeder der beiden simulierten Kalibrierschlitze KL und KR verläuft in y-Richtung mit einer Länge von 7,6 mm und einer Breite von 50 µm. Der Abstand in x-Richtung beträgt 10 mm. Jeder der simulierten meßschlitze Sa.b weist eine horizontale Breite Bx von 130 µm und eine vertikale Breite By von 400 µm auf. Der Musterabstand Ax in x-Richtung beträgt 6.130 µm = 780 µm, während der Musterabstand Ay in y-Richtung 2.400 µm = 800 µm beträgt.

In Fig. 3 ist ein Teil der Blendeneinrichtung 22 von einer strichpunktierten Linie 26 umgeben. Die Abmessungen dieses Teils des simulierten Blendenmittels stimmen im wesentlichen mit denjenigen des Bildschirnteils von Fig. 5a überein.

Das simulierte Blendenmittel wird so relativ zu den Leuchtstoffstreifen justiert, daß die vertikalen Mittellinien mit den vertikalen Mittellinien derjenigen Leuchtstoffstreifen, auf denen Bereiche leuchten, übereinstimmen. Dies erfolgt ganz einfach dadurch, daß die Röhre zunächst so betrieben wird, daß alle Leuchtflecke im Gesichtsfeld des Bildwandlers leuchten, die zum zu untersuchenden Elektronenstrahl gehören. Das Bild dieser Bereich wird aufgenommen. Im RAM werden dann die zugehörigen Bereiche ermittelt und innerhalb dieser Bereiche werden diejenigen festgelegt, die für die weitere Bildauswertung genutzt werden. Dies sind die simulierten Meßschlitze. Sie werden so gelegt, daß sich Randeffekte, wie sie in den Leuchtflecken erkennbar sind, möglichst nicht auf die spätere Messung auswirken.

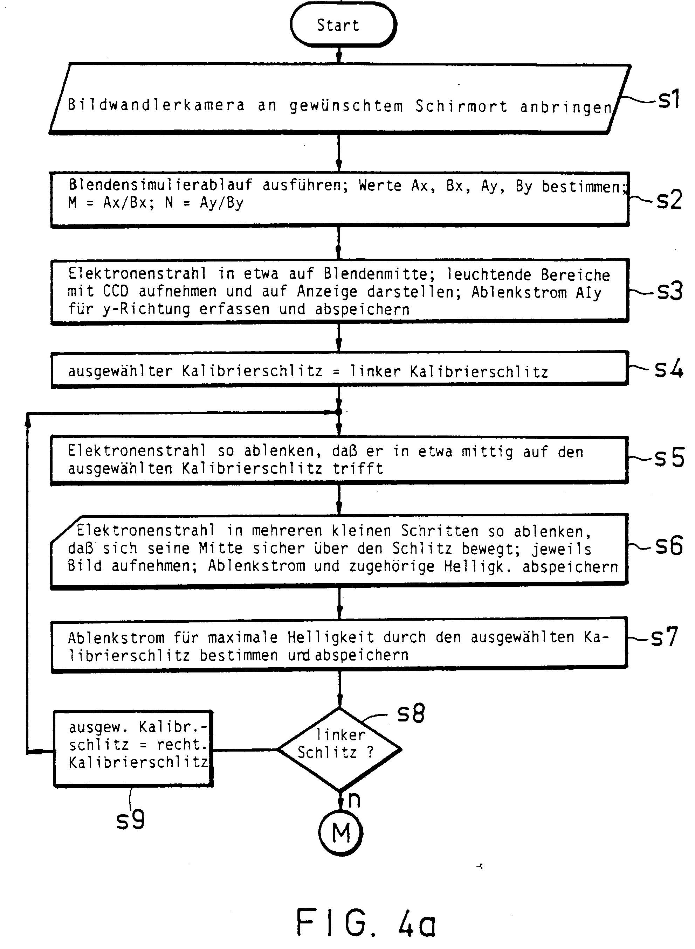

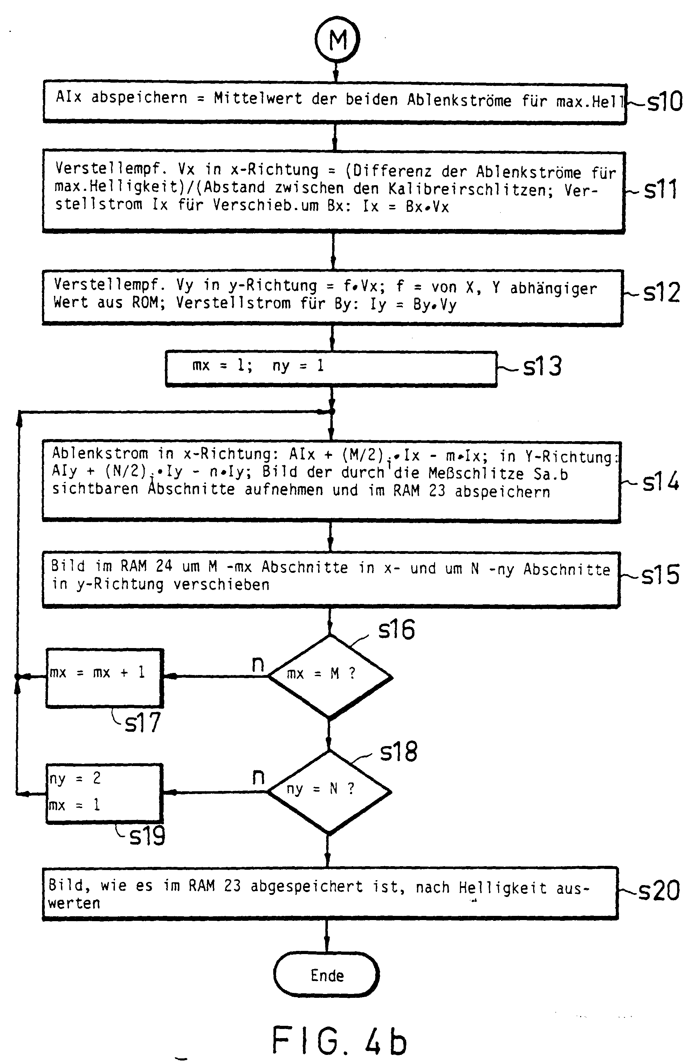

Anhand von Fig. 4 wird nun ein Ausführungsbeispiel eines von der Vorrichtung gemäß Fig. 1 ausführbaren Verfahrens erläutert, das sich auf die in den Fig. 2 und 3 angegebenen Abmessungen stützt.

Zunächst (Schritt sl) stellt der Benutzer die Kamera 19 an einen ausgewählten Schirmort. Dann löst er den im vorletzten Absatz beschriebenen Blendensimulierablauf aus (Schritt s2). Danach liegen die die Daten Bx, Ax, By, und Ay fest. Mit Hilfe dieser Daten werden zwei ganze Zahlen M und N bestimmt, die angeben, wie oft ein simulierter Meßschlitz in x-bzw. y-Richtung in das Gebiet bis zu den benachbarten simulierten Meßschlitzen paßt. Diese zwei ganzen Zahlen werden in einem in der Auswertel-ogik 24 vorhandenen RAM abgespeichert.

Nun (Schritt s3) wird der Elektronenstrahl in etwa auf die Mitte des Bildwandlers gelenkt. Dabei werden die vom Elektronenstrahl erzeugten beleuchteten Gebiete dauernd von der Bildwandlerkamera 19 aufgenommen und nach Zwischenspeicherung im RAM 23 und Auswertung in der Auswertelogik 24 auf der Anzeige 25 dargestellt. Der Benutzer kann somit durch Beobachten der An25 den Elektronenstrahl ziemlich genau mittig stellen. Sobald dies erfolgt ist, wird der schließlich eingestellte Ablenkstrom AIy für die Einstellung in y-Richtung erfaßt und abgespeichert. Hierzu wird der bereits genannte RAM in der Auswertelogik 24 verwendet.

Es schließen sich nun Schritte s4 bis s9 für einen Kalibriervorgang an. Zunächst wird als ausgewählter Kalibrierschlitz der linke simulierte Kalibrierschlitz KL gewählt (Schritt s4). Dann wird der Elektronenstrahl so abgelenkt, daß er in etwa mittig auf den ausgewählten Kalibrierschlitz trifft (Schritt s5). Nun wird der Elektronenstrahl in mehreren kleinen Schritten so abgelenkt, daß sich seine Mitte mit Sicherheit über den ausgewählten Kalibrierschlitz bewegt. Nach jedem Schritt wird ein Bild aufgenommen, und dieses wird in bezug auf die Helligkeit des durch den simulierten Kalibrierschlitz tretenden Lichtes ausgewertet. Für jeden Schritt werden die Helligkeit und der zugehörige Ablenkstrom abgespeichert (Schritt s6). Sind diese Verstellschritte ausgeführt, wird der Ablenkstrom für maximale Helligkeit durch den ausgewählten Kalibrierschlitz bestimmt, und dieser Wert wird abgespeichert (Schritt s7). Stellt sich in einem anschließenden Schritt s8 heraus, daß der ausgewählte Kalibrierschlitz der linke simulierte Kalibrierschlitz ist, wird in einem folgenden Schritt S9 der rechte simulierte Kalibrierschlitz KR als Kalibrierschlitz ausgewählt, und es werden die Schritte s5 bis s7 entsprechend wiederholt. Bei erneutem Erreichen von Schritt S8 stellt sich diesmal heraus, daß der ausgewählte Kalibrierschlitz nicht der linke simulierte Kalibrierschlitz ist, weswegen nun der weitere Verfahrensablauf folgt.

In den folgenden Schritten s10 bis s12 werden verschiedene werte aus den Meßergebnissen berechnet, wie sie beim Kalibriervorgang gemäß den Schritten s4 bis s9 erfaßt wurden.

Zunächst wird der Mittelwert AIx der beiden Ablenkströme für maximale Helligkeit bestimmt (Schritt s10). Wird dieser Ablenkstrom eingestellt, befindet sich der Elektronenstrahl genau mittig zwischen den beiden simulierten Kalibrierschlitzen. Als Verstellempfindlichkeit Vx in x-Richtung wird das Verhältnis (Differenz der Ablenkströme für jeweils maximale Helligkeit)/(Abstand zwischen den simulierten Kalibrierschlitzen) bestimmt. Hieraus erhält man den Verstellstrom Ix für ein Verschieben des Elektronenstrahls um die Strecke Bx zu Ix = Bx · Vx (Schritt S11). Eine entsprechende Größe wird für die y-Richtung benötigt. Hierzu könnte ein Kalibriervorgang entsprechend demjenigen für die x-Richtung erfolgen, jedoch ist dies für die Praxis in der Regel nicht erforderlich, da das Verhältnis zwischen den Ablenkströmen für die x- und die y-Richtung, die jeweils eine vorgegebene gleiche Verschiebung bewirken, für jeden Schirmort mit wesentlich größerer relativer Genauigkeit bekannt ist, als der Strom, der erforderlich ist, um z. B. in x-Richtung einen bestimmten x-Ort zu erreichen. Die Verstellwerte für die y-Richtung werden daher nicht durch Kalibrierung bestimmt, sondern dadurch, daß die Verstellempfindlichkeit Vy in y-Richtung zu f · Vx bestimmt wird, wobei f ein vorbestimmter Faktor ist. Der Verstellstrom Iy zum Verschieben des Elektronenstrahls um die Strecke By beträgt Iy = By · Vy (Schritt s12).

Nachdem nun alle Größen zum korrekten Verstellen des Elektronenstrahls bestimmt sind, werden Schritte s13 bis s19 ausgeführt, die dazu dienen, einen hypothetischen Leuchtfleck aufzunehmen, wie er erzeugt würde, wenn keine Schattenmaske vorhanden wäre und der Leuchtschirm homogen mit demjenigen Leuchtstoff beschichtet wäre, auf den die Elektronenstrahlen aktuell durch die Schattenmaske hindurchtreffen.

Wie weiter oben anhand von Fig. 2 erläutert, muß der Elektronenstrahl fünfmal um die Breite Bx horizontal und einmal um die Breite By vertikal verschoben werden, damit alle Leuchtfleckgebiete einmal durch die simulierten Meßschlitze hindurch sichtbar waren. Insgesamt sind sechs Bilder für die x-Richtung jeweils in einer ersten und einer zweiten vertikalen Lage erforderlich. Für die Bilder werden zwei Zählparameter verwendet, nämlich mx und ny. In Schritt s13 werden beide Parameter auf den Wert "1" gesetzt. Anschließend wird der Elektronenstrahl in Schritten verschoben, die in etwa symmetrisch zu seiner Mittenlage liegen. Hierzu wird für die x-Richtung jeweils der Strom AIx + (M/2)ᵢ · Iₓ - m · Iₓ und für die y-Richtung der Ablenkstrom AIy +(N/2)ᵢ · Iy - n · I_{y} eingestellt. Der Index i bedeutet hierbei, daß der ganzzahlige Teil des Bruchs gemeint ist. Sobald der Elektronenstrahl durch diese Ströme eingestellt ist, wird das Bild der durch die simulierten Meßschlitze erkennbaren Abschnitte aufgenommen und im RAM 23 abgespeichert (Schritt s14).

Da alle Bilder durch dieselben simulierten Meßschlitze hindurch aufgenommen werden und dadurch bei jedem Schritt von denselben CCD-Pixeln aufgenommen werden, diese Bilder aber nebeneinanderliegende Abschnitte des Elektronenflecks betreffen, muß dafür gesorgt werden, daß diese Einzelbilder tatsächlich nebeneinander und nicht übereinander liegen. Dies erfolgt dadurch, daß in einem Schritt s15 das Bild im RAM um M - mx Bereiche in x-Richtung und um N - ny Bereiche in y-Richtung verschoben wird. Nachdem dies erfolgt ist, wird in einem Schritt S16 untersucht, ob bereits die Bilder für alle Abschnitte in x-Richtung aufgenommen wurden. Ist dies nicht der Fall, wird der Wert mx in einem Schritt s17 um "1" erhöht, und die Schritte s14 bis s16 werden wiederholt. Ergibt sich in Schritt s16, daß alle erforderlichen Aufnahmen in x-Richtung erfolgt sind, wird in Schritt s18 überprüft, ob auch alle Aufnahmen für die y-Richtung erledigt wurden. Da dies noch nicht der Fall ist, wird in einem Schritt S19 der Wert des Zählparameters ny auf "2" gesetzt, wohingegen mx erneut den Wert "1" erhält, damit die Schleifs der Schritte s14 bis s17 wieder durchlaufen wird, bis auch für die zweite y-Lage alle sechs Bilder in x-Richtung erstellt sind. Sind diese sechs Bilder erstellt, wird wieder Schritt s18 erreicht, in dem sich nun herausstellt, daß auch alle y-Lagen abgearbeitet wurden. Nun bleibt nur noch übrig, das im RAM abgespeicherte Bild nach seiner Helligkeit auszuwerten (Schritt S20). Dies kann z. B. in Richtung der horizontalen und der vertikalen Mittelachsen des aufgenommenen Bildes erfolgen, was dann dasselbe Meßergebnis liefert wie beim herkömmlichen Verfahren. Auch beim erfindungsgemäßen Verfahren und bei der erfindungsgemäßen Vorrichtung wird, wie beim Stand der Technik, davon ausgegangen, daß die Elektronendichteverteilung mit der Helligkeitsverteilung übereinstimmt.

Im Anschluß an den eben erläuterten Schritt s20 wird das Verfahren beendet. Es kann am selben Schirmort in der vorstehend beschriebenen Weise noch für die Elektronenstrahlen für die beiden anderen Farben ausgeführt werden, ohne daß hierzu zuvor eine mechanische Justierung erforderlich wäre. Zum Ausmessen der beiden weiteren Elektronenstrahlen reicht es aus, die Schritte s13 bis s20 des Ablaufs von Fig. 4 auszuführen, da die in den Schritten s1 bis s12 bestimmten Werte für alle Elektronenstrahlen an einem vorgegebenen Schirmort im wesentlichen gleich sind.

Was die x-Richtung betrifft, würden angesichts der Geometrie von Fig. 5 fünf Aufnahmen in x-Richtung pro y-Lage ausreichen, wobei simulierte Mepschlitze von 156 µm statt 130 µm Breite zu verwenden wären. Jedoch wäre es dann nicht auszuschließen, daß sich Randeffekte der Maskenschlitze bemerkbar machen.

Es sei darauf hingewiesen, daß der vorstehend beschriebene Ablauf der Verschiebungen in zwei y-Lagen bei durchgehenden Leuchtstoffstreifen, wie in Fig. 5 a) dargestellt, eigentlich nicht erforderlich ist, was leicht durch Betrachten der simulierten Blendenanordnung von Fig. 3 erkennbar ist: durch schrittweises Verschieben mit der oben angegebenen Schrittweite um insgesamt 2·Ax werden alle hinter der Blende liegende Flächengebiete einmal sichtbar - mit Ausnahme von Gebieten in den Randbereichen. Man wird also vorteilhafterweise nur x- und keine y-Verschiebungen vornehmen. Der anhand der Flußdiagramme beschriebene Ablauf ist jedoch nötig, 5 wenn ein Leuchtfleck an einer Röhre auszumessen ist, die nicht Streifen sondern Dots aus Leuchtstoff aufweist.

Im Prinzip reicht es aus, mit einem einzigen simulierten Meßschlitz zu arbeiten, was sich jedoch nur empfiehlt, wenn Elektronenstrahlen mit sehr kleinem Durchmesser vorliegen. Nur im letzten Fall ist es möglich, trotz nur eines simulierten Meßschlitzes nur wenige Verschiebungen zu tätigen. Jede Verschiebung mit der zugehörigen Aufnahme benötigt etwa 30 msec. Die Berechnungen zum Auswerten des insgesamt aufgenommenen Bildes dauern etwa 1 Sekunde. Wird ein großer Elektronenfleck unter gleichzeitiger Nutzung von z. B. 40 simulierten Meßschlitzen mit insgesamt 12 Aufnahmen aufgenommen, benötigt die gesamte sich an die Kalibrierung anschließende Messung nur etwa 2 Sekunden. Müßte dagegen wegen Benutzung nur eines einzigen simulierten Meßschlitzes das etwa 40-fache an Aufnahmen getätigt werden, würde die Meßzeit auf etwa 30 Sekunden anwachsen.

Es sei darauf hingewiesen, daß zum Verschieben des Elektronenstrahls für die einzelnen Messungen auch eine Hilfsablenkeinrichtung statt der ohnehin vorhandenen Ablenkeinrichtung verwendet werden kann.

Gemäß der vorstehenden Beschreibung wird der Elektronenstrahl während des Meßvorgangs nur um ein kleines Stück verschoben. Diese Vorgehensweise ist allerdings nur dann möglich, wenn die Elektronendichteverteilung sehr schwacher Elektronenstrahlen ausgemessen wird. Im Fall eines Elektronenstrahl mit einem Strahlstrom von 3 mA wurde dieser während des Meßablaufs mit 50 Hz für jeweils 20 µsec aufgetastet, also mit einem Tastverhältnis von 1:1000 betrieben.

## Patentansprüche

1. Vorrichtung zum Messen der über den Querschnitt eines Elektronenstrahls vorhandenen Elektronendichteverteilung bei einer nach dem Schattenmaskenprinzip arbeitenden und Leuchtstoffstreifen (R, G, B) an der Innenseite des Leuchtschirms habenden Farbbildröhre, wobei jedoch nur die Elektronen des Elektronenstrahls, welche ein Loch der Schattenmaske durchdrungen haben und auf einem diesem Elektronenstrahl zugeordneten Leuchtstoffstreifen (R, G, B) auftreffen und dort einen Leuchtfleck hervorrufen, zur Messung der Dichteverteilung von der Außenseite des Leuchtschirms zur Verfügung stehen, mit
- einem Blendenmittel;
- einer Kamera (19) zum Aufnehmen der Bilder von Leuchtfleckgebieten, wie sie bei Wirkung des relativ zur Kamera angeordneten Blendenmittels sichtbar sind;
- einer Ansteuereinrichtung (18) zum Ansteuern einer Ablenkeinrichtung (17) der Farbbildröhre in solcher Weise, daß der Elektronenstrahl gegenüber der Kamera verschoben wird; und
- einer Auswerteeinrichtung (20) zum Auswerten der von der Kamera aufgenommenen Bilder, um ein Ergebnis über die vom Elektronenstrahl hervorgerufene Leuchtdichteverteilung zu erhalten, mit der die Elektronendichteverteilung im wesentlichen übereinstimmt;
**dadurch gekennzeichnet**, daß
- die Kamera eine Bildwandlerkamera (19) ist und
- eine Ablaufsteuerung (21) vorhanden ist, die
-- zum Erzeugen eines simulierten Blendenmittels
--- die Ansteuereinrichtung (18) zum Ablenken des Elektronenstrahls so ansteuert, daß Leuchtflecke im gesamten Gesichtsfeld des Bildwandlers erzeugt werden; und
--- die Auswerteeinrichtung (20), welcher der vom Bildwandler im vorherigen Schritt empfangenen Signale zur Verfügung gestellt werden, so ansteuert, daß diese für die weitere Nutzung solche Bildwandlerbereiche auswählt, die innerhalb derjenigen Bildwandlerbereiche liegen, in denen die Leuchtflecke abgebildet werden, wobei die ausgewählten Bildwandlerbereiche als simulierte Blendenschlitze eines simulierten Blendenmittels wirken, durch die die Leuchtfleckabschnitte erkennbar sind; und
-- zum Feststellen der Elektronendichteverteilung
--- die Ansteuereinrichtung (18) so ansteuert, daß diese den Elektronenstrahl schrittweise mit solcher Schrittweite verschiebt, daß jeweils vor dem Verschiebeschritt erkennbare Leuchtfleckabschnitte nach dem Verschiebeschritt gerade nicht mehr erkennbar sind, wobei die Ansteuerung für so viele Schritte zumindest in horizontaler Richtung erfolgt, daß alle Leuchtfleckgebiete gerade einmal erkennbar waren;
--- die Bildwandlerkamera (19) so ansteuert, daß diese vor dem ersten Verschiebeschritt und nach jedem weiteren Verschiebeschritt von den jeweils erkennbaren Leuchtfleckabschnitten Bilder aufnimmt; und
--- die Auswerteeinrichtung (20) so ansteuert, daß diese alle Bilder abspeichert und zu einem Gesamtbild für die vom Elektronenstrahl erzeugte Leuchtdichteverteilung zusammensetzt.

2. Vorrichtung nach Anspruch 1, **dadurch gekennzeichnet**, daß das simulierte Blendenmittel (22) über mindestens ein Paar zueinander paralleler simulierter Kalibrierschlitze (KL, KR) verfügt, die in der rechtwinklig zur Längsrichtung dieser simulierten Kalibrierschlitze stehenden Richtung um eine vorgegebene Strecke voneinander beabstandet sind.

3. Verfahren zum Messen der über den Querschnitt eines Elektronenstrahls vorhandenen Elektronendichteverteilung bei einer nach dem Schattenmaskenprinzip arbeitenden und Leuchtstoffstreifen (R, G, B) an der Innenseite des Leuchtschirms habenden Farbbildröhre, wobei jedoch nur die Elektronen des Elektronenstrahls, welche ein Loch der Schattenmaske durchdrungen haben und auf einem diesem Elektronenstrahl zugeordneten Leuchtstoffstreifen (R, G, B) auftreffen und dort einen Leuchtfleck hervorrufen, zur Messung der Dichteverteilung von der Außenseite des Leuchtschirms zur Verfügung stehen, mit folgenden Schritten:
- Verschieben des Elektronenstrahls;
- Aufnehmen der Bilder von Leuchtfleckgebieten, wie sie bei Verschiebung des Elektronenstrahls bei Wirkung eines Blendenmittels erkennbar sind; und
- Auswerten der aufgenommenen Bilder, um ein Ergebnis über die vom Elektronenstrahl hervorgerufene Leuchtdichteverteilung zu erhalten, mit der die Elektronendichteverteilung im wesentlichen übereinstimmt;
**dadurch gekennzeichnet**, daß
- zum Aufnehmen der Bilder eine Bildwandlerkamera verwendet wird;
- zum Erzeugen eines simulierten Blendenmittels Leuchtflecke im gesamten Gesichtsfeld des Bildwandlers erzeugt werden und solche Bildwandlerbereiche für weitere Nutzung ausgewählt werden, die innerhalb derjenigen Bildwandlerbereiche liegen, in denen die Leuchtflecke abgebildet werden, wobei ausgewählte Bildwandlerbereiche als simulierte Blendenschlitze eines simulierten Blendenmittels wirken, durch die Leuchtfleckabschnitte erkennbar sind; und
- zum Feststellen der Elektronendichteverteilung
-- der Elektronenstrahl schrittweise mit solcher Schrittweite verschoben wird, daß jeweils vor dem Verschiebeschritt erkennbare Leuchtfleckabschnitte nach dem Verschiebeschritt gerade nicht mehr erkennbar sind, wobei die Ansteuerung für so viele Schritte zumindest in horizontaler Richtung erfolgt, daß alle Leuchtfleckgebiete gerade einmal erkennbar waren;
-- die Bildwandlerkamera so angesteuert wird, daß sie vor dem ersten Verschiebeschritt und nach jedem Verschiebeschritt von den jeweils erkennbaren Leuchtfleckabschnitten Bilder aufnimmt; und
-- alle Bilder abgespeichert und zu einem Gesamtbild für die Leuchtdichteverteilung zusammengesetzt werden.

4. Verfahren nach Anspruch 3, **dadurch gekennzeichnet**, daß
- in einem ersten Kalibrierschritt der Elektronenstrahl in eine vorgegebene Lage gestellt wird und der hierfür erforderliche Ablenkstrom gemessen wird;
- in einem zweiten Kalibrierschritt der Elektronenstrahl in eine zweite vorgegebene Lage gestellt wird und der hierfür erforderliche Ablenkstrom gemessen wird; und
- als Empfindlichkeit für die Schrittweiteneinstellung der Verschiebeschritte das Verhältnis von Differenz zwischen den Ablenkströmen zur Entfernung zwischen vorgegebenen Lagen gebildet wird.

## Revendications

1. Dispositif pour mesurer la répartition de la densité d'électrons sur la section transversale d'un faisceau électronique dans un tube image en couleurs fonctionnant selon le principe du masque d'ombre et comportant des bandes luminescentes (R V, B) sur la face intérieure de l'écran luminescent, seuls les électrons du faisceau électronique qui ont traversé un trou du masque d'ombre et heurtent une bande luminescente (R, V, B) associée à ce faisceau électronique et y produisent un spot lumineux, étant toutefois disponibles pour la mesure de la répartition d'intensité du côté extérieur de l'écran luminescent, comprenant
- un moyen de diaphragme ;
- une caméra (19) pour prendre les vues de zones de spot lumineux, telles qu'elles sont visibles lors de l'action du moyen de diaphragme associé à la caméra ;
- un dispositif d'excitation (18) pour exciter un dispositif déflecteur (17) du tube image en couleurs de manière telle que le faisceau électronique est déplacé par rapport à la caméra ; et
- un dispositif d'analyse (20) destiné à analyser les vues prises par la caméra pour obtenir un résultat sur la répartition de la densité lumineuse qui est suscitée par le faisceau électronique et avec laquelle coïncide pour l'essentiel la répartition de la densité d'électrons ; caractérisé par le fait que
- la caméra est une caméra à convertisseur d'image (19), et
- il existe une commande séquentielle (21) qui
-- pour produire un moyen de diaphragme simulé
--- commande le dispositif d'excitation (18) pour dévier le faisceau électronique de telle manière que des spots lumineux sont produits dans tout le champ optique du convertisseur d'image ; et
--- commande le dispositif d'analyse (20), auquel sont fournis les signaux reçus par le convertisseur d'image au cours de l'étape précédente, de manière telle que ledit dispositif sélectionne, pour l'utilisation ultérieure, des zones du convertisseur d'image qui se trouvent à l'intérieur des zones du convertisseur d'image dans lesquelles sont reproduits les spots lumineux, les zones du convertisseur d'image sélectionnées agissant comme fentes simulées d'un moyen de diaphragme simulé par lesquelles on peut distinguer les parties de spot lumineux ; et
-- pour déterminer la répartition de la densité d'électrons
--- commande le dispositif d'excitation (18) de manière telle que ce dernier déplace pas à pas le faisceau électronique avec une largeur de pas telle que des parties de spot lumineux respectivement visibles avant le pas de déplacement ne sont juste plus visibles après le pas de déplacement, la commande pour un tel nombre de pas s'effectuant au moins dans la direction horizontale pour que toutes les zones de spot lumineux aient été vues juste une fois ;
--- commande la caméra à convertisseur d'image (19) de manière telle que celle-ci prend, avant le premier pas de déplacement et après chaque nouveau pas de déplacement, des vues des parties de spot lumineux respectivement visibles ; et
--- commande le dispositif d'analyse (20) de manière telle que celui-ci mémorise toutes les vues et les assemble pour obtenir une image globale de la répartition de la densité d'électrons produite par le faisceau électronique.

2. Dispositif selon la revendication 1, caractérisé par le fait que le moyen de diaphragme simulé (22) possède au moins une paire de fentes de calibrage (KL, KR) simulées et parallèles entre elles qui sont écartées l'une de l'autre d'une distance prédéterminée, dans la direction perpendiculaire à la direction longitudinale de ces fentes de calibrage simulées.

3. Procédé pour mesurer la répartition de la densité d'électrons sur la section transversale d'un faisceau électronique dans un tube image en couleurs fonctionnant selon le principe du masque d'ombre et comportant des bandes luminescentes (R V, B) sur la face intérieure de l'écran luminescent, seuls les électrons du faisceau électronique qui ont traversé un trou du masque d'ombre et heurtent une bande luminescente (R, V, B) associée à ce faisceau électronique et y produisent un spot lumineux, étant toutefois disponibles pour la mesure de la répartition d'intensité du côté extérieur de l'écran luminescent, comprenant les étapes suivantes :
- déplacement du faisceau électronique ;
- prise des vues de zones de spot lumineux telles qu'elles peuvent être distinguées lors du déplacement du faisceau électronique avec action d'un moyen de diaphragme ; et
- analyse des vues prises pour obtenir un résultat sur la répartition de la densité lumineuse qui est suscitée par le faisceau électronique et avec laquelle coïncide pour l'essentiel la répartition de la densité d'électrons ; caractérisé par le fait que
- l'on utilise une caméra à convertisseur d'image pour prendre les vues ;
- pour produire un moyen de diaphragme simulé, on produit des spots lumineux dans tout le champ optique du convertisseur d'image et on sélectionne, pour une utilisation ultérieure, des zones du convertisseur d'image qui se trouvent l'intérieur des zones du convertisseur d'image dans lesquelles sont reproduits les spots lumineux, des zones du convertisseur d'image sélectionnées agissant comme fentes simulées d'un moyen de diaphragme simulé à travers lesquelles on peut distinguer des parties de spot lumineux ; et
- pour déterminer la répartition de la densité d'électrons
-- on déplace pas à pas le faisceau électronique avec une largeur de pas telle que des sections de spot lumineux respectivement visibles avant le pas de déplacement ne sont juste plus visibles après le pas de déplacement, la commande pour un tel nombre de pas s'effectuant au moins dans la direction horizontale pour que toutes les zones de spot lumineux aient été vues juste une fois ;
-- on commande la caméra à convertisseur d'image de manière telle qu'elle prend, avant le premier pas de déplacement et après chaque pas de déplacement, des vues des sections de spot lumineux respectivement visibles ; et
-- on mémorise et assemble toutes les vues pour obtenir une image globale de la répartition de la densité d'électrons.

4. Procédé selon la revendication 3, caractérisé par le fait que
- au cours d'une première étape de calibrage, on place le faisceau électronique dans une position prédéterminée et on mesure le courant de déviation nécessaire pour cela ;
- au cours d'une seconde étape de calibrage, on place le faisceau électronique dans une deuxième position prédéterminée et on mesure le courant de déviation nécessaire pour cela ; et
- on forme le rapport de la différence entre les courants de déviation sur la distance entre des positions prédéterminées, pour la sensibilité du réglage de la largeur des pas de déplacement.

## Claims

1. A device for measuring the electron density distribution, present over the cross-section of an electron beam, in a colour picture tube which operates in accordance with the lens mask principle and possesses phosphor strips (R, G, B) on the inside of the screen, wherein however only those electrons of the electron beam which have penetrated through an aperture in the lens mask and which hit a phosphor strip (R, G, B) assigned to this electron beam, where they produce a light spot, are available for measuring the density distribution from the outside of the screen, with
- a diaphragm means;
- a camera (19) for recording the images of light spot zones such as are visible when the diaphragm means, disposed relative to the camera, is operative;
- a drive device (18) for driving a deflecting device (17) of the colour picture tube in such manner that the electron beam is displaced relative to the camera; and
- an analysis device (20) for analyzing the images recorded by the camera in order to obtain a result relating to the luminance distribution which is produced by the electron beam and to which the electron density distribution substantially corresponds;
characterised in that
- the camera is an image converter camera (19) and
- a flow control unit (21) is provided which
-- in order to produce a simulated diaphragm means
--- actuates the drive device (18) for the deflection of the electron beam in such manner that light spots are produced in the entire field of vision of the image converter; and
--- actuates the analysis device (20), to which signals received by the image converter in the previous step are made available, in such manner that said analysis device (20) selects, for further use, those image converter zones which lie within those image converter zones in which the light spots are reproduced, where the selected image converter zones act as simulated diaphragm slits of a simulated diaphragm means through which the light spot sections are detectable; and
-- for the determination of the electron density distribution
--- actuates the drive device (18) in such manner that said drive device displaces the electron beam in stepped fashion with a step size such that light spot sections in each case detectable before the displacement step are no longer detectable after the displacement step, wherein the driving takes place, at least in the horizontal direction, for a number of steps such that all the light spot zones were detectable once;
--- actuates the image converter camera (19) in such manner that before the first displacement step and after each further displacement step said image converter camera records images of the light spot sections which are in each case detectable and
--- actuates the analysis device (20) in such manner that said analysis device stores all the images and assembles them to form a combined image for the luminance distribution produced by the electron beam.

2. A device as claimed in Claim 1, characterised in that the simulated diaphragm means (22) possesses at least one pair of simulated calibrating slits (KL, KR) which are parallel to one another and which, in the direction at right angles to the longitudinal direction of these simulated calibrating slits, are spaced from one another by a predetermined distance.

3. A process for measuring the electron density distribution, present over the cross-section of an electron beam, in a colour picture tube which operates in accordance with the lens mask principle and possesses phosphor strips (R, G, B) on the inside of the screen, wherein however only those electrons of the electron beam which have penetrated through an aperture in the lens mask and which hit a phosphor strip (R, G, B) assigned to this electron beam, where they produce a light spot, are available for measuring the density distribution from the outside of the screen, comprising the following steps:
- displacement of the electron beam;
- recording of the images of light spot zones such as are detectable in the case of the displacement of the electron beam when a diaphragm means is operative; and
- analysis of the recorded images in order to obtain a result relating to the luminance distribution which is produced by the electron beam and to which the electron density distribution substantially corresponds;
characterised in that
- an image converter camera is used for the recording of the images;
- for the production of a simulated diaphragm means, light spots are produced in the entire field of vision of the image converter and those image converter zones which lie inside the image converter zones in which the light spots are reproduced are selected for further use, wherein selected image converter zones act as simulated diaphragm slits of a simulated diaphragm means through which light spot sections are detectable; and
- for the determination of the electron density distribution
-- the electron beam is displaced in stepped fashion with a step size such that light spot sections in each case detectable before the displacement step are no longer detectable after the displacement step, wherein the driving takes place, at least in the horizontal direction, for a number of steps such that all the light spot zones were detectable once;
-- the image converter camera is actuated in such manner that before the first displacement step and after each displacement step it records images of the light spot sections which are in each case detectable; and
-- all the images are stored and assembled to form a combined image for the luminance distribution.

4. A process as claimed in Claim 3, characterised in that
- in a first calibrating step the electron beam is brought into a predetermined position and the deflecting current required for this purpose is measured;
- in a second calibrating step the electron beam is brought into a second predetermined position and the deflecting current required for this purpose is measured; and
- as sensitivity for the step size adjustment of the displacement steps the ratio is formed of the difference between the deflecting currents to the distance between predetermined positions.
